# NEUE EUROPÄISCHE PATENTSCHRIFT

(11) **EP 1 757 831 B2**
(45) Veröffentlichungstag und Bekanntmachung des Hinweises auf die Entscheidung über den Einspruch: **20.06.2018**
(45) Hinweis auf die Patenterteilung: 22.06.2011
(21) Anmeldenummer: 06010869.3
(22) Anmeldetag: 26.05.2006
(51) Int. Cl.: F16D 25/12, F16D 25/10

(54) **Doppelkupplungseinrichtung und Radiallagerungskonzept hierfür**
Dual clutch arrangement and radial bearing conception for it
Dispositif de embrayage double et concept de butée radial pour cet embrayage

(30) Priorität: 03.06.2005 DE 102005025979
(43) Veröffentlichungstag der Anmeldung: 28.02.2007
(73) Patentinhaber: ZF Friedrichshafen AG, 88046 Friedrichshafen (DE)
(72) Erfinder: Großpietsch, Wolfgang, 97422 Schweinfurt (DE); Stampf, Volker, 97422 Schweinfurt (DE); Reißer, Wolfgang, 97526 Sennfeld (DE); Flückiger, Martin, 97421 Schweinfurt (DE); Kundermann, Wolfgang, 97422 Schweinfurt (DE)
(74) Vertreter: 2SPL Patentanwälte PartG mbB

(56) Entgegenhaltungen:
- EP-A1- 1 464 860
- EP-B1- 0 269 835
- WO-A1-2004/104450
- DE-A1- 2 657 058
- DE-A1- 3 605 443
- DE-A1- 4 424 479
- DE-A1- 10 004 190
- DE-A1- 10 114 281
- DE-A1- 10 241 514
- DE-A1- 19 921 687
- DE-A1-102004 015 927
- DE-A1-102004 015 927
- DE-B4- 10 004 189
- DE-C1- 10 223 780
- DE-C2- 19 928 648
- DE-T5-112005 000 702
- US-A- 2 967 396
- US-A- 2 967 396
- US-A- 4 606 449
- US-A- 4 606 449
- US-B2- 6 851 536
- US-B2- 7 063 193
- Bericht über das neue Doppelkupplungsgetriebe von Volkswagen, ATZ 11/2003, Jahrgang 105
- Eine Präsentation mit einer Zusammenstellung der über ein Benchmark der DQ 250 Kupplung (der zum vorgenannten neuen Doppelkupplungsgetriebes von Volkswagen gehörenden Kupplung) erhaltene Informationen vom 09.01.2004
- Zusammenstellung von Bildern, aufgenommen in Rahmen des Benchmarks der DQ 250 Kupplung
- Ein Hauptschnitt des vorgenannten Getriebes
- Artikel der Online-Encyclopedia Wikipedia betreffend Doppelkupplungsgetriebe
- Eidesstattliche Versicherung von Herrn Ivo Agner (26.06.2013)
- BERGER C.ET AL: 'Taschenbuch für den Maschinenbau / Dubbel', Bd. 10. AUFL, 1997, SPRINGER-VERLAG, BERLIN Seiten E116 - E117
- Kopie der Vortragsfolie 5, "Dual Clutch System", veröffentlicht im Mai 2000
- Bilder Kupplungsgehäuse Materialkennzeichnung
- Aachener Kolloquium 2009
- QTZ 11/2003 Jahrgang 105 "Das neue Doppelkupplungsgetriebe von Volkswagen"
- Fachkunde Kraftfahrzeugtechnik, 1999
- Vieweg Handbuch Kraftfahrzeugtechnik, Oktober 2000
- Bosch Kraftfahrzeugtechnisches Taschenbuch, 24. Auflage, 2002
- Wärmeausdehnungstabelle zu passender legierung
- Vortrag mit Simulation zum Verschlussdeckel auf Stand 2004

## Beschreibung

Die Erfindung bezieht sich auf eine Doppelkupplungseinrichtung, welche zwischen einer Antriebseinheit und einem Getriebe mit zugehörigem Getriebegehäuse angeordnet ist, wobei die Doppelkupplungseinrichtung ein Kupplungsgehäuse, welches mit dem Getriebegehäuse verbunden ist oder dieses umfasst, aufweist und wobei zwischen einem die Öffnung begrenzenden Randbereich einer am Kupplungsgehäuse radial abgestützten Verschlusswandung eine Radiallageranordnung zur radialen Lagerung der Kupplungseinrichtung vorgesehen ist.

Es sind bereits Doppelkupplungseinrichtungen bekannt, (z. B. DE 10 2004 016 061 . A1), bei denen die Kupplungseinrichtung mittels einer Radiallageranordnung in einer Öffnung einer am Kupplungsgehäuse abgestützten Verschlusswandung gelagert ist. Hierbei ist eine erste Radiallageranordnung zwischen der Verschlusswandung und dem Ankoppelglied vorgesehen, wobei zwischen dieser Radiallageranordnung und dem Kupplungsgehäuse eine Toleranzausgleichseinrichtung angeordnet ist. Die Verschlusswandung ist hierbei am radial äußeren Umfang paßgenau und axial verschieblich im Kupplungsgehäuse angeordnet. Zwischen der Verschlusswandung und einem Sicherungsring ist zum Ausgleich von axialen Toleranzen eine Toleranzausgleichsvorrichtung vorgesehen, welche als Federelement und/oder Einstellscheiben ausgebildet ist um axiale Toleranzen zwischen dem Lagersitz der Radiallageranordnung und der Nut des Sicherungsringes auszugleichen. Nachteilig bei der hier offenbarten Ausgestaltung der Verschlusswandung sind zum einen die erforderliche Paßgenauigkeit gegenüber dem Kupplungsgehäuse und zum anderen ist eine axiale Beweglichkeit des Dekkels unter hoher Radiallast über die Radiallageranordnung nicht immer gewährleistet. Unter hoher Radiallast bewirken die statischen Dichtungen zwischen Deckel und Kupplungsgehäuse eine hohe Haftreibung, welche höher sein kann als die Federkraft der Tellerfeder und somit eine axiale Beweglichkeit des Deckels nicht mehr gewährleistet ist. Da die Kupplungseinrichtung in Richtung Getriebe an der äußeren Getriebeeingangswelle abgestützt ist, bewirkt ein axiales Verschieben dieser Getriebeeingangswelle oder/und der radial inneren Welle in Richtung Antriebseinrichtung eine sehr hohe Axialkraft auf die Radiallageranordnung, welche durch die fehlende axiale Verlagerbarkeit des Deckels nicht mehr reduziert werden kann. Hierdurch kann es zu Schäden an der Radiallageranordnung infolge hoher Lagerbelastung kommen, da die Toteranzausgteichsvorrichtung unwirksam wird. Ein geringfügiges radiales Spiel zwischen der Verschlusswandung und dem Kupplungsgehäuse würde zwar ein Festsitzen des Deckels reduzieren, würde jedoch unter Radiallast zu einer Verformung des Deckels und zu einer radialen Verlagerung der Kupplungseinrichtung führen.

Hiervon ausgehend ist es Aufgabe der Erfindung die Lagerung und die axiale Verschiebbarkeit der Kupplungseinrichtung derart weiterzubilden, dass Lagerbelastungen und die radiale Verlagerung der Kupplungseinrichtung aufgrund von Fügespiel und Verformung der Verschlusswandung minimiert werden.

Hierzu wird nach einem ersten Aspekt der Erfindung vorgeschlagen, dass die Kupplungseinrichtung durch eine Radiallageranordnung zwischen der Verschlusswandung und dem Ankoppelglied gelagert wird, wobei die Verschlusswandung radial elastisch ausgebildet ist.

Vorteilhaft bei dieser Ausführung der Verschlusswandung ist, dass diese mit einer radialen Vorspannung im Kupplungsgehäuse angeordnet ist, wodurch zum einen Durchmessertoleranzen des Kupplungsgehäuses und der Verschlusswandung, welche eine Passungenauigkeit der beiden Bauteile zueinander bewirken, ausgeglichen werden können und wodurch zum Anderen eine Temperaturgangkompensation erfolgt. Erfindungsgemäß ist die Verschlusswandung in einem radial äußeren Bereich radial elastisch ausgebildet, wodurch der Radius der Verschlusswandung und damit der Außenumfang der Verschlusswandung gegen eine radiale Federkraft der Verschlusswandung verringert werden kann. Vorzugsweise hat hierbei eine elastische Durchmesserverkleinerung keine Auswirkung auf den Durchmesser oder/und der Position des von der Verschlusswandung gebildeten Lagersitzes der Radiallageranordnung. Höchstvorzugsweise ist die Verschlusswandung im radial inneren Bereich im Wesentlichen steif ausgebildet. Hierdurch ist die radiale Lagerung der Kupplungseinrichtung im Kupplungsgehäuse sicher gewährleistet. Weiterhin ist durch die radiale Vorspannung die Verschlusswandung wesentlich steifer als bei Einbaulage mit Fügespiel. Bei Fügespiel kann sich die Verschlusswandung bei Radiallast an das Kupplungsgehäuse anlegen, weiterhin führt es zu einer Abplattung des Anlagebereichs, da die Verschlusswandung im Spalt ausweicht. Weiterhin werden durch die radiale Vorspannung der Verschlusswandung im Kupplungsgehäuse die Eigenfrequenzen der Eigenformen der Verschlusswandung erhöht, wodurch die Eigenfrequenzen vorzugsweise außerhalb des Anregungsbereichs z. Bsp.der Antriebseinheit oder/und des Getriebes liegen. Zusätzlich wird dadurch das Problem der Schallanregung der Verschlusswandung reduziert.

Nach einem wesentlichen Aspekt der Erfindung ist vorgesehen, dass die Verschlusswandung axial elastisch ausgebildet ist. Vorzugsweise dient hierbei die Verschlusswandung als eine Axialsicherung der Kupplungseinrichtung in Richtung Antriebseinheit, welche im radial äußeren Bereich axial fest angeordnet ist und im radial inneren Bereich der Radiallageranordnung einer Axialkraft axial nachgibt. Hierdurch können Axialkraftbelastungen auf die Radiallageranordnung durch Axialkräfte der Verschlusswandung in Richtung Getriebe sowie Axialkraftbelastungen auf die Radiallageranordnung durch Axialkräfte der Kupplungseinrichtung in Richtung Antriebseinheit durch die axiale Federwirkung der Verschlusswandung im radial inneren Bereich reduziert werden. Ein axiales Verschieben der Getriebeeingangswelle, an welcher die Kupplungseinrichtung in Richtung Getriebe axial abgestützt ist, und auch der anderen Welle in Richtung Antriebseinrichtung bewirkt erfindungsgemäß eine entsprechende axiale Auslenkung der Verschlusswandung, wobei die Axialkraftbelastung auf die Radiallageranordnung der axialen Federkraft der Verschlusswandung entspricht. Vorteilhaft hierbei ist eine weitgehend gegen Bauteiltoleranzen tolerante Axialsicherung der Kupplungseinrichtung. Durch die axiale Elastizität der Verschlusswandung kann weiterhin gewährleistet werden, dass die erste Lageranordnung definiert axial vorgespannt ist und die Lagersitze der Radiallageranordnung sich bei Relativbewegung des Kupplungsgehäuses zu den Getriebeeingangswellen nichtzueinander axial verschieben.

Ein Montagevorgang der Verschlusswandung zum Schließen der Gehäuseöffnung sieht vor, dass die Radiallageranordnung zusammen mit der Verschlusswandung als eine fertige Baueinheit ausgebildet ist. Die Radiallageranordnung ist als Kugellager ausgebildet. Hierbei ist das Kugellager bereits in oder auf den von der Verschlusswandung gebildeten ersten Lagersitz gepreßt. Zur Montage dieser Baueinheit in das Kupplungsgehäuse ist ein Montagewerkzeug vorgesehen, welches die Radiallageranordnung auf den vom Ankoppelglied der Kupplungseinrichtung gebildeten zweiten Lagersitz schiebt. Vorzugsweise greift hier das Montagewerkzeug axial an dem dem zweiten Lagersitz zugeordneten Teil der Radiallageranordnung, höchstvorzugsweise einem Lagerring, axial an. Es kann hierbei vorgesehen sein, dass das Montagewerkzeug zusätzlich axial auf die Verschiusswandung drückt. Hierdurch wirken beim Montagevorgang der Radiallageranordnung keine unterschiedlichen Axialkräfte innerhalb der Radiallageranordnung. Bei Montage der Verschlusswandung mitsamt der Radiallageranordnung auf das Ankoppelglied der im Kupplungsgehäuse axial positionierten Kupplungseinrichtung, wird der Außenumfang der Verschlusswandung zwangsläufig auf den Durchmesser des Kupplungsgehäuses eingefedert, wodurch dem axialen Verschieben der Verschlusswandung eine Gegenkraft in Richtung Antriebseinheit entgegenwirkt. Ein axiales Angreifen des Montagewerkzeugs lediglich am dem zweiten Lagersitz zugeordneten Lagerring würde über die Verschlusswandung eine entgegengesetzte Axialkraft am ersten Lagersitz bewirken, was das Lager schädigen könnte. Es wurde bereits erwähnt, dass sich im Zuge des Montagevorganges der Verschlusswandung ins Kupplungsgehäuse der Außenumfang der Verschlusswandung zwangsgeführt verringert, da die Verschlusswandung so ausgelegt ist, dass der Durchmesser im unbelasteten Zustand etwas größer als der Innenumfang des Kupplungsgehäuses an der entsprechenden Axialposition der montierten Verschlusswandung ausgelegt ist. Durch das radiale Einfedern des radial äußeren Umfangsbereiches der Verschlusswandung wird die axiale Position des Au-ßenumfangsbereichs bezüglich der axialen Position des Innenumfangsbereichs geringfügig verschoben. Vorzugsweise ist hierbei die Geometrie der Verschlusswandung so ausgelegt, dass beim radialen Einfedern der Verschlusswandung der Außenumfangsbereich axial in Richtung Antriebseinheit, bzw. der radial innere Bereich in Richtung Getriebe ausgelenkt wird. Damit wird beim axialen Aufschieben auf den Lagersitz des Ankoppelglieds der radiale Außenumfangsbereich axial etwas hinterhergezogen, wodurch ein Verklemmen im Kupplungsgehäuse verhindert wird. Eine vorteilhafte Ausgestaltung der Montagevorrichtung sieht weiterhin vor, dass beim Aufschieben der Radiallageranordnung auf das Ankoppelglied die Kupplungseinrichtung mittels der Montagevorrichtung an der Haltevorrichtung des Ankoppelgliedes gegengehalten und vorzugsweise vor dem Aufschieben der Radiallageranordnung axial um eine vorbestimmte Strecke in Richtung Antriebseinheit gezogen wird, wodurch beim anschließenden Aufschieben der Radiallageranordnung sich die Verschlusswandung in einem Bereich des Kupplungsgehäuses befindet in welchem der Durchmesser des Kupplungsgehäuses größer ausgebildet ist als im Bereich der Einbaulage. Hierdurch können der Montagevorgang der Lageranordnung und der Montagevorgang ins Kupplungsgehäuse, welcher ein radiales Einfedern der Verschlusswandung bewirkt getrennt werden, so daß beim Aufschieben der Lageranordnung im Wesentlichen keine Gegenkraft durch die Verschlusswandung wirkt. In einem weiteren Montageschritt wird dann durch axiales Drücken auf die Verschlusswandung diese soweit in das Kupplungsgehäuse gedrückt, bis die Kupplungseinrichtung ihre vorbestimmte Einbaulage erreicht hat und sich axial an einer Getriebewelle in Richtung Getriebe abstützt. Vorzugsweise wirkt hierbei das Montagewerkzeug im Bereich des Außenumfangs der Verschlusswandung und stützt sich während des gesamten Montagevorganges axial in Richtung Antriebseinheit am Kupplungsgehäuse ab. Das Montagewerkzeug ist hierzu vorzugsweise mehrteilig aufgebaut, wobei zumindest ein Teil fest mit dem Kupplungsgehäuse verbunden ist, und sich zumindest ein zweiter Teil axial zum ersten Teil verschieben läßt.

Eine erfindungsgemäß Ausgestaltung gemäß Anspruch 1 der Verschlusswandung sieht vor, dass am Außenumfang eine nach radial außen offene Nut zur Aufnahme eines Dichtelementes angeordnet ist. Vorteilhaft hierbei ist, dass ein geschlossener O-Ring als Dichtelement in die Nut einsetzbar ist, welcher mit seinem Außenumfang am Kupplungsgehäuse fest anliegt und hierbei das Kupplungsgehäuse in Richtung Antriebseinheit abdichtet. Eine erfindungsgemäß Ausgestaltung gemäß Anspruch 1 der Nut sieht vor, dass eine Nutwandung einen radial größeren Außendurchmesser aufweist als die andere. Dabei weist die der Antriebseinheit zugewandte, bzw. einem axialen Sicherungselement zugewandte Nutwandung den größeren Durchmesser auf und liegt radial im Kupplungsgehäuse an. Ferner liegt die andere Nutwandung radial nicht am Kupplungsgehäuse an. Vorteilhaft hierbei ist, dass beim Montagevorgang der Verschlusswandung ins Kupplungsgehäuse nicht die dem Getriebe zugewandte Nutwandung axial am Innenumfang des Kupplungsgehäuses entlang geschoben wird und damit über die Gegendichtfläche des Dichtungselementes geschoben wird, welche hierbei beschädigt werden könnte. Die Ausgestaltung der Verschlusswandung sieht erfindungsgemäß vor, dass das Material der Verschlusswandung einen geringeren Wärmeausdehnungskoeffizienten als das Material des Kupplungsgehäuses aufweist. Eine Temperaturerhöhung bewirkt dadurch eine größere Ausdehnung des Kupplungsgehäuse relativ zur Ausdehnung der Verschlusswandung. Wie bereits ausgeführt, ist die Verschlusswandung sowohl radial als auch axial elastisch ausgebildet. Die Verschlusswandung kann somit als eine Art Tellerfeder betrachtet werden, welche bei axialer Federung Ihren Außendurchmesser ändert. Eine Durchmesserverkleinerung der Verschlusswandung aufgrund radialer Zwangskräfte, wie sie bei ungleichmäßiger Temperaturausdehnung aufgrund unterschiedlicher Ausdehnungskoeffizienten auftritt, bewirkt eine axiale Verlagerung des radial inneren Bereichs. Die Verschlusswandung ist vorzugsweise so ausgebildet, dass eine elastisch radiale Durchmesserverkleinerung eine axiale Verlagerung des radial inneren Bereichs in Richtung Getriebe bewirkt. Durch den geringeren Wärmeausdehnungskoeffizienten der Verschlusswandung wird gewährleistet, dass in einem Betriebstemperaturzustand der Kupplungseinrichtung, welcher in einen weitaus höheren Temperaturbereich liegt als der bei Montage der Kupplungseinrichtung, sich das Kupplungsgehäuse stärker radial ausdehnt als die Verschlusswandung. Hierdurch wird die Verschlusswandung radial entlastet, wodurch sich der radial innere Bereich der Verschlusswandung in Richtung Antriebseinheit verlagert und die Radiallageranordnung entlastet wird. Hierdurch wird eine Axialkraftbelastung der Radiallageranordnung durch die Verschlusswandung aufgrund der höheren Wärmeausdehnung des Kupplungsgehäuses vermieden. Eine Temperaturerniedrigung hat demzufolge eine Axialkrafterhöhung auf die Radiallageranordnung zur Folge. Vorzugsweise ist die Verschlusswandung als Stahlblechdeckel ausgeführt. Höchstvorzugsweise ist das Kupplungsgehäuse als Alugussteil ausgeführt. Vorteilhaft bei der Verwendung von Stahl sind die elastischen Eigenschaften des Materials, so daß die Verschlusswandung sowohl radial als auch axial elastisch ausgeführt werden kann. Weiterhin können die Wandstärken im Vergleich zu einer Ausführung der Verschlusswandung aus Aluminium dünn gehalten werden, was dem axialen Bauraumbedarf der Kupplungseinrichtung zugute kommt. Vorzugsweise kann für die Verschlusswandung ein mikrolegierter Stahl der Sorte QStE oder ZstE verwendet werden. Es können jedoch auch austenitische Stähle für die Herstellung der Verschlusswandung verwendet werden. Vorteilhaft gegenüber der Verwendung von mikrolegierten Stählen ist die geringere Differenz zwischen den Wärmeausdehnungskoeffizienten von Aludruckguß und austenitischen Stählen im Vergleich zur Differenz zwischen den Wärmeausdehnungskoeffizienten von Aludruckguß und mikrolegierten Stählen. Eine geringere Differenz der Wärmeausdehnungskoeffizienten bewirkt hierbei eine geringere Differenz zwischen der Ausdehnung des Kupplungsgehäuses und der Ausdehnung der Verschlusswandung. Eine Temperaturerhöhung, welche eine abnehmende Radialkraft auf die Verschlusswandung bewirkt, führt somit nicht zu einer vollständigen radialen Entlastung der Verschlusswandung, eine Temperaturerniedrigung hingegen bewirkt keine übergroß zunehmende Radialkraft auf die Verschlusswandung. Um auch bei mikrolegierten Stählen eine vollständige radialen Entlastung zu vermeiden wird die Verschlusswandung mit einer größeren Überdeckung zum Gehäusedurchmesser ausgelegt. Eine weiteres vorteilhaftes Material zur Herstellung der Verschlusswandung stellen sogenannte TRIP-(transformation-induced-plasticity) Stähle dar. Vorteilhaft hierbei sind die gute Umformbarkeit durch verformungsinduzierte Martensitbildung, eine hohe Kaltverfestigung, sowie eine geringe Korossionsanfälligkeit des Materials, wodurch eine Oberflächenbehandlung speziell der antriebseitigen Seite der Verschlusswandung, welche sich im Trockenraum befindet und damit korossionsanfälliger ist als die sich im Naßraum befindliche getriebeseitige Seite der Verschlusswandung, entfallen kann. Nach einem wesentlichen Aspekt der Erfindung wird der Stahlblechdeckel in einem Tiefziehverfahren hergestellt. Vorzugsweise wird der Stahlblechdeckel hierbei kalt umgeformt, wobei die am Außenumfang angeordnete Nut eingerollt wird. Nach einem weiteren wesentlichen Aspekt der Erfindung weist die Verschlusswandung in einem radial äußeren Bereich eine axiale Einbuchtung auf. Diese sich in axialer Richtung erstreckende Einbuchtung ist wesentlich größer ausgebildetals die Wandstärke der Verschlusswandung, wodurch ein radiales Einfedern des Außenumfangsbereichs der Verschlusswandung ermöglicht wird. Die Form der Einbuchtung kann vorzugsweise U-förmig ausgestaltet sein. Alternativ kann der Verlauf. der Verschlusswandung auch andersartig aber gleichwirkend, wie z. Bsp. V-förmig oder S-förmig ausgestaltet sein. Der radiale Verlauf der Verschlusswandung muß immer eine Komponente in Axialrichtung aufweisen, welche groß gegenüber der Wandstärke ist, um ein radiales Einfedern der Verschlusswandung zu ermöglichen. Vorzugsweise erstreckt sich die axiale Einbuchtung der Verschlusswandung in Richtung Getriebe, also in den Naßraum und befindet sich radial außerhalb der Kupplungseinrichtung. Höchstvorzugsweise erstreckt sich die Einbuchtung hierbei in einen Axialbereich der Kupplungseinrichtung wodurch die Verschlusswandung platzsparend angeordnet werden kann.

Nach einer Ausgestaltung der Erfindung gemäß Anspruch 2 sind am Außenumfang der Verschlusswandung axiale Stege angeordnet, welche vorzugsweise rotationssymmetrisch angeordnet sind. Vorteilhaft hierbei ist, dass damit eine unterbrochene Außenumfangsfläche ausgebildet ist, welche eine wesentlich höhere radiale Elastizität aufweist als eine geschlossene Außenumfangsfläche und damit ein radiales Einfedern wesentlich erleichtert, bzw. ermöglicht. Erfindungsgemäß wird die Verschlusswandung in Richtung Antriebseinheit über die axialen Stege, welche axial an einem Sicherungselement anliegen, abgestützt. Die Stege überbrücken einen Tell der Sicherungsringnut und die Einführschräge für die Verschlusswandung und das Dichtungselement im Gehäuse.

Eine erfindungsgemäße Ausgestaltung des Sicherungselementes sieht hierbei vor, dass das Sicherungselement als Toleranzausgleichsvorrichtung wirkt. Hierzu ist das Sicherungselement vorzugsweise als Sicherungsring ausgebildet, welcher in einer Umfangsnut am Innenumfang des Kupplungsgehäuses angeordnet ist. Wie bereits erwähnt, wird bei der Montage der Kupplungseinrichtung die Verschlusswandung mit der Radiallageranordnung soweit auf die Kupplungseinrichtung und diese in das Getriebe geschoben, bis sich die Kupplungseinrichtung an einer, vorzugsweise der äußeren, Getriebeeingangswelle abstützt. Je nach Toleranzlage der einzelnen Bauteile wie Kupplung, Getriebeeingangswellen und Kupplungsgehäuse zueinander werden die Stege am Außenumfang der Verschlusswandung relativ zu der Umfangsnut, bzw. deren motorseitigen Nutwandung, einen anderen Abstand einnehmen. Damit ist eine exakte Bestimmung der Toleranzlage der Kupplungseinrichtung gegenüber dem Kupplungsgehäuse möglich und somit eine toleranzabhängige Auswahl eines Sicherungselementes. Durch eine entsprechende Auswahl eines Sicherungsringes mit passender axialer Materialstärke ist eine genaue Anschlagposition der Verschlusswandung einstellbar. Vorteilhaft hierbei ist, dass keine separate Toleranzausgleichsvorrichtung nötig ist.

Nach einem weiteren Aspekt kann die axiale Elastizität der Verschlusswandung im eingebauten Zustand dazu verwendet werden, die axiale Vorspannung auf die motorseitige Radiallageranordnung zu bestimmen oder um zu bestimmen, ob zwischen der Verschlusswandung und dem Axialanschlag der Kupplungseinrichtung Spiel vorliegt.

Hierzu wird das Getriebe samt eingebauter Kupplungseinrichtung und Verschlusswandung in die Senkrechte gebracht. Mittels einer Prüfvorrichtung wird die Kupplungsvorrichtung an der Haltevorrichtung des Ankoppelgliedes um eine definierte Strecke aus dem Kupplungsgehäuse herausgezogen. Der Kupplungseinrichtung wirkt hierbei die axiale Federkraft der Verschlusswandung entgegen. Mittels der Prüfvorrichtung wird die aufzuwendende Kraft bestimmt. Da die Verschlusswandung wie eine Feder mit linearer Kennlinie wirkt, kann über die gemessene Kraft bei bekannter axialer Steifigkeit der Verschlusswandung die Vorspannkraft auf das Radiallager in der Einbaulage bestimmt werden. Ist im Einbauzustand die Verschlusswandung so eingebaut, dass zwischen der Kupplungseinrichtung und dem axialen Anschlag in Richtung Getriebe Spiel vorliegt, zieht die Kupplungsvorrichtung die Verschlusswandung bei senkrechter Lage durch ihre Gewichtskraft in Richtung Getriebe. Die gemessene Anhebkraft bei einem bestimmten Anhebweg ist damit geringer als die Kraft bei spielfrei eingebauter Verschlusswandung, wodurch ein axiales Spiel der Kupplungseinrichtung detektiert werden kann.

Eine zu hohe axiale Vorspannung der Verschlusswandung auf die Radiallageranordnung bewirkt eine ebenso hohe Kraft auf die Axiallager, welche zwischen den Naben der Innenlamellenträger und dem Ankoppelglied angeordnet sind. Das Ankoppelglied dreht im Wesentlichen mit Motordrehzahl, während die Innenlamellenträger bei geöffneten Kupplungsanordnungen stehen. Durch die auf die Naben wirkende Axialkraft erfahren die Naben und die mit den Naben gekoppelten Getriebeeingangswellen ein Drehmoment, welches proportional der Axialkraft ist. Hierdurch besteht ein direkter Zusammenhang zwischen Vorspannung der Verschlusswandung und dem auf die Innenlamellenträger, bzw. den Getriebeeingangswellen, wirkendem Schleppmoment. Damit bewirkt eine zu hohe axiale Vorspannung der Verschlusswandung nicht nur eine schädliche Axialkraftbelastung auf die Radiallageranordnung, sondern zusätzlich ein ungewünscht hohes Schleppmoment der Kupplungseinrichtung. Mit dem Prüfverfahren der Einbausituation der Verschlusswandung, kann somit die Axialkraftbelastung überprüft werden.

Bevorzugte Ausführungsbeispiele der Erfindung sind in den Figuren dargestellt.

Es zeigt:
- Fig. 1: eine erfindungsgemäße Ausgestaltung einer Doppelkupplungseinrichtung
- Fig. 2: einen dreidimensionalen Schnitt der Verschlusswandung aus Fig.1
- Fig. 3: einen Ausschnitt der Verschlusswandung im Detail.
- Fig. 4: die Doppelkupplungseinrichtung aus Fig.1 mit einer alternativen Verschlusswandung
- Fig. 5: die Doppelkupplungseinrichtung aus Fig.1 mit einer alternativen Verschlusswandung

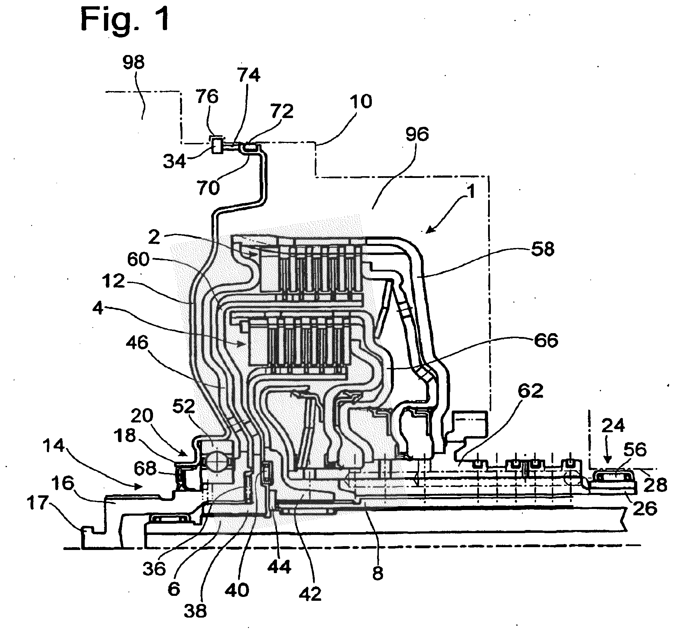

In Fig. 1 ist eine erfindungsgemäße Doppelkupplungsanordnung dargestellt. Die Doppelkupplungseinrichtung besteht im wesentlichen aus den beiden Kupplungsanordnungen 2 und 4. Hierbei ist die äußere Kupplungsanordnung 2 über ihren Innenlamellenträger und der Nabe des Innenlamellenträgers 38 mit der inneren Getriebeeingangswelle 6, welche als Hohlwelle ausgebildet ist, verbunden. Die zweite Kupplungsanordnung 4, welche radial innerhalb der ersten Kupplungsanordnung 2 angeordnet ist, ist mittels ihrem Innenlamellenträger und der Nabe des Innenlamellenträgers 42 mit der äußeren Getriebeeingangswelle 8, welche als Hohlwelle ausgebildet ist, verbunden. Das Drehmoment, welches von einer nicht dargestellten Antriebseinheit erzeugt wird und über einen ebenfalls nicht dargestellten Torsionsschwingungsdämpfer geleitet wird, wird über das Ankoppelglied 16, welches mit einer Außenverzahnung zur Aufnahme der Sekundärseite des Torsionsschwingurandämpfers ausgestattet ist, in die Doppelkupplungseinrichtung 1 eingeleitet. Das Drehmoment kann sodann über das Ankoppelglied 16, den mit dem Ankoppelglied 16 verschweißten Mitnehmer 46 über den Außenlamellenträger 58 der ersten Kupplungsanordnung 2 auf die Ölzufuhrnabe 62, und von dieser auf den Außenlamellenträger 66 der zweiten Kupplungsanordnung 4 übertragen werden. Der Mitnehmer 46 ist an seinem Außenumfang drehfest und spielfrei mit dem Außenlamellenträger 58 verschweißt. Die Kupplungseinrichtung 1 wird über zwei Radiallageranordnungen 20, 24 im Getriebegehäuse, bzw. Kupplungsgehäuse 10 gelagert. Die erste Lageranordnung 20 ist hierbei als Rillenkugellager 52 ausgebildet. Hierbei ist der Außenring des Rillenkugellagers 52 in einen axialen Abschnitt der Verschlusswandung 12 eingepreßt und der Innenring des Rillenkugellagers auf einen dafür vorgesehenen Lagersitz des Ankoppelgliedes 16. Über die Ölzuführnabe 62 wird die Kupplungseinrichtung sowohl mit Drucköl zum Betätigen der beiden Kupplungsanordnungen 2, 4, als auch mit Kühlöl zum Kühlen der beiden Lamellenpakete der beiden Kupplungsanordnungen 2, 4, versorgt. Das Kühlöl durchströmt radial die Kupplungseinrichtung und tritt über radiale Öffnungen im Außenlamellenträger 58 nach radial außen in den Naßraum 96, von wo aus es zurück in den Ölsumpf fließt. Die Verschlusswandung trennt den Naßraum 96 dichtend vom Trockenraum 98, in welchen sich das Ankoppelelement hinein erstreckt. Die Verschlusswandung 12 ist an ihrem Außenumfang radial elastisch im Kupplungsgehäuse 10 angeordnet. Die Verschlusswandung 12 weist an ihrem Außenumfang die Ringnut 70 auf, welche einen Dichtungsring 72 aufnimmt. Weiterhin sind benachbart der Ringnut 70 axiale Stege 74 angeordnet, welche sich an einem Sicherungselement 34, welches in einer an einem Sicherungselement 34, welches in einerNut des Kupplungsgehäuses 10 axial befestigt ist, abstützen. Die Verschlusswandung 12 ist in ihrem inneren Randbereich 18 mit einem Dichtungselement 68, welches die Doppelkupplungseinrichtung 1 radial innen zum Trockenraum 98 hin abdichtet, versehen. Hierbei ist das Dichtungselement 68 drehfest mit der Verschlusswandung 12 verbunden und dichtet auf einer Dichtfläche des Ankoppelelements 16 das rotierende Ankoppelglied 16 gegen die stehende Verschlusswandung 12 ab. Die Verschlusswandung 12 ist in axialer Richtung elastisch ausgeführt. Damit kann eine definierte Vorspannung auf das Rillenkugellager 52 aufgebracht werden. Zusätzlich ist dadurch die axiale Sicherung gegen ein Verschieben der Doppelkupplungseinrichtung 1 in Richtung der Antriebseinheit sichergestellt. Gegen ein Verschieben in Richtung Getriebe ist die Doppelkupplungseinrichtung 1 über die Axialsicherung 44 abgestützt. Die Axialsicherung 44, welche an der Nabe 42 des Innenlamellenträgers der zweiten Kupplungseinrichtung 4 drehfest befestigt ist, stützt sich an der Stirnseite der äußeren Getriebeeingangswelle 8 axial ab. Über das Axiallager 40, die Nabe des Innenlamellenträgers 38 der ersten Kupplungsanordnung 2 und das axiale Gleitlager 36, welches auch als Wälzlager ausgeführt sein könnte, welches zwischen der Nabe 38 und dem Ankoppelglied 16 angeordnet ist, wird die Kupplungseinrichtung in Richtung Antriebseinheit axial gesichert. Die Verschlusswandung 12 ist in ihrem radialen Außenbereich radial elastisch ausgebildet. Dadurch kann der Durchmesser der Verschlusswandung so ausgeführt werden, dass der Durchmesser mit einigen 1/10 mm Überdeckung größer gegenüber dem Innendurchmesser des Kupplungsgehäuses 10 ausgebildet ist. Im eingebauten Zustand ist die Verschlusswandung 12 radial eingefedert und stützt sich mit radialer Vorspannung im Kupplungsgehäuse 10 ab. Diese radiale Elastizität im Außenumfang ist im Wesentlichen vom Innenumfangsbereich der Verschlusswandung 12 wirkmäßig abgekoppelt, wobei die Verschlusswandung 12 im radial inneren Bereich ebenfalls eine gewisse radiale Elastizität aufweist. Damit werden Radialschwingungen der Antriebseinheit, welche nicht gänzlich mittels des Torsionsschwingungsdämpfers eliminiert werden können, und auf das Ankoppelglied 16 übertragen werden, gegenüberdem Kupplungsgehäuse 10 abgefedert. Weiterhin können dadurch Radialkräfte, welche durch einen Achsversatz zwischen Antriebseinheit und Getriebe entstehen und bei radial starrer Lagerung zu Zwangskräften auf das Radiallager und zwischen Primär und Sekundärseite des Torsionsschwingungsdämpfers führen würden mittels der Verschlusswandung 12 abgefedert werden. Axial entgegengesetzt der ersten Lageranordnung 20 befindet sich die zweite Radiallageranordnung 24. Die Lageranordnung 24 ist als Nadellager 56 ausgebildet. Das Nadellager 56 weist einen Innenring, welcher auf einem ersten Lagersitz 26 der Ölzufuhrnabe 62 angeordnet ist, und einen Außenring, welcher auf einem zweiten Lagersitz 28 im Kupplungsgehäuse 10 angeordnet ist, auf. Das Nadellager 56 ist als sog. Loslager ausgebildet, da sich der Innenring bezüglich der Wälzkörper des Nadellagers axial verschieben kann. Überdas Sicherungselement 34 können axiale Toleranzen zwischen der Stirnseite der Getriebeeingangswelle bezüglich der motorseitigen Nutwandung der Ringnut 76 im Kupplungsgehäuse 10, in welche das Sicherungselement 34 eingreift, ausgeglichen werden. Hierzu wird je nach Toleranzlage ein unterschiedlich dickes Sicherungselement 34, welches als Sicherungsring ausgebildet ist, in die Ringnut 76 eingesetzt. Die Ringnut 76 ist hierzu breiterals der Sicherungsring ausgeführt, welcher sich an der motorseitigen Nutwandung abstützt. Damit kann sichergestellt werden, dass im wesentlichen immer die gleiche axiale Vorspannung bei verschiedenen Toleranzlagen auf das Rillenkugellager 52 aufgebracht wird. Anstelle des Rillenkugellagers 12 kann auch ein Schrägkugellager verwendet werden. Am Ankoppelglied 16 ist am motorseitigen Ende die Haltevorrichtung 17 angeordnet, über welche die Kupplungseinrichtung 1 bei der Montage der Verschlusswandung 12 gehalten oder/und in Richtung Antriebseinheit gezogen wird. Hierzu ist die Haltevorrichtung mit einem Halteelement ausgebildet, welches von der Montagevorrichtung axial hintergriffen werden kann oder weist eine axiale Bohrung mit einem Innengewinde zum Einschrauben einer Halteschraube auf.

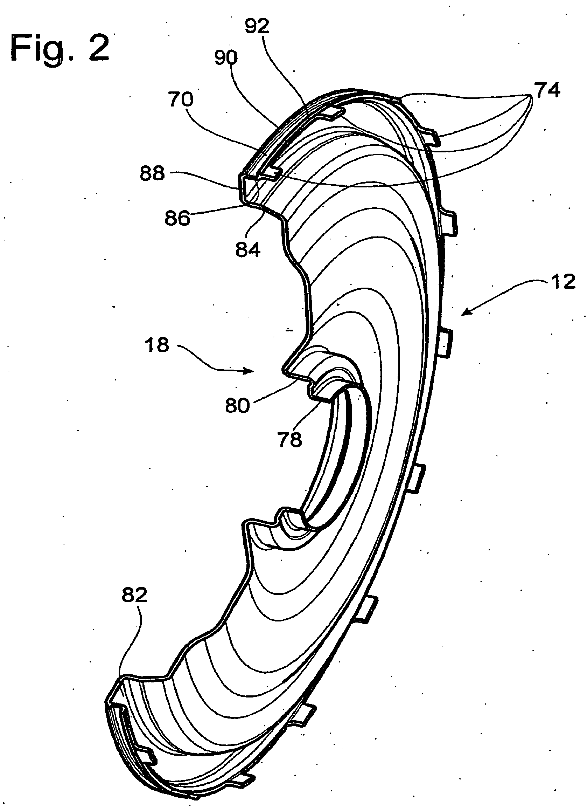

Fig. 2 zeigt die Verschlusswandung 12 aus Figur 1 in einer dreidimensionalen Schnittdarstellung. Hierbei sind im inneren Randbereich 18 die beiden zylindrischen Bereiche 78 und 80 angeordnet, wobei der Innenumfang des axial äußeren und radial kleineren Bereichs 78 zur Aufnahme des Dichtungselementes dient und wobei der Innenumfang des radial größeren Bereichs 80 zur Aufnahme der Radiallageranordnung. Im radial äußeren Bereich ist die axiale Ausbuchtung 82 angeordnet, welche aus den beiden im Wesentlichen axial verlaufenden Bereichen 84 und 86 und dem radial verlaufenden Bereich 88 besteht. Am Außenumfang ist die Ringnut 70 mit den beiden Nutwänden 90 und 92 angeordnet. Axial an die Nutwand 92 schließen sich die axialen Stege 74 an, welche rotationssymmetrisch am Umfang angeordnet sind.

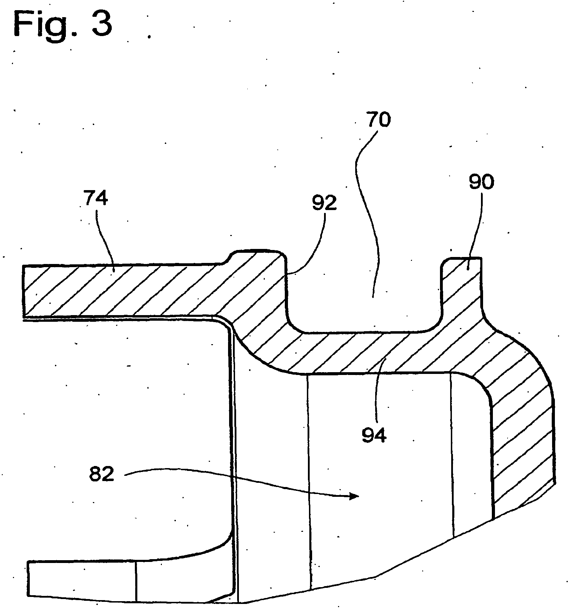

In Fig.3 ist der Bereich der äußeren Ringnut der Verschlusswandung im Detail dargestellt. Die Ringnut 70 besteht aus den beiden Nutwandungen 92 und 90 und dem Nutboden 94. Der radiale Außendurchmesser der Nutwand 90, welche im eingebauten Zustand getriebeseitig angeordnet ist, ist hierbei kleiner ausgeführt als der radiale Außendurchmesser der Nutwand 92, welche im eingebauten Zustand motorseitig angeordnet ist. Hierdurch liegt im eingebauten Zustand der Verschlusswandung, in welchem die Verschlusswandung radial eingefedert ist, die Nutwand 92 am Innenumfang des Kupplungsgehäuses radial an, wohingegen zwischen dem Außenumfang der Nutwand 90 und dem Kupplungsgehäuse Spiel bestehen kann. Hierdurch wird bei der Montage der Verschlusswandung die Dichtungsfläche des Kupplungsgehäuses nicht durch die Nutwandung 90 beansprucht, welche zuerst die Dichtungsfläche überstreicht. Das Dichtungselement, welches in der Nut 70 angeordnet ist, überstreicht dieselbe Dichtfläche zeitlich erst nach der Nutwandung 90. Die motorseitige Nutwandung 92 überstreicht bei der Montage nicht die Dichtfläche des Dichtungselementes, wodurch eine mögliche Beschädigung der Innenumfangsfläche des Kupplungsgehäuses durch die Nutwandung 92 bezüglich der Abdichtung keine Rolle spielt. Axial an die Nutwandung erstrecken sich die axialen Stege 74 in Richtung Antriebseinheit, wobei der Außendurchmesser der axialen Stege 74 kleiner als der Au-ßendurchmesser der Nutwandung 92 ausgebildet ist und im Wesentlichen auf gleichem Umfangsradius wie die Nutwandung 90 liegt. Beim radialen Einfedern der Verschlusswandung 12, welche durch das Anliegen der Nutwandung 92 am Innenumfang des Kupplungsgehäuses 10 bewirkt wird, werden im Wesentlichen die beiden axialen Bereiche 84, 86 der Fig.2 der Ausbuchtung 82 nach radial innen verlagert, wobei der Bereich 86 im Wesentlichen aus dem Nutboden 94 gebildet wird. Der radiale Bereich 88 trägt zu dem gewünschten Einfederverhalten durch axiales einfedern und verkippen wesentlich bei. Die radiale Höhe des Bereichs 88 entspricht hierbei in etwa der axialen Ausbuchtungstiefe der Ausbuchtung 82, womit beim radialen Einfedern eine optimale Spannungsverteilung erreicht wird. Die axialen Stege tragen aufgrund ihres unterbrochenen Außenumfangsbereichs, welcher durch den Abstand der einzelnen Stege zueinander gebildet wird, nicht wesentlich zur Federwirkung bei, wodurch das radiale Einfedern wesentlich erleichtert wird.

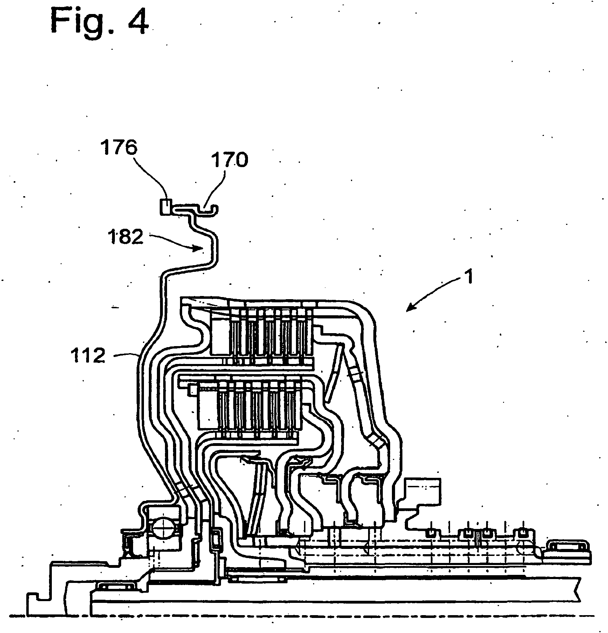

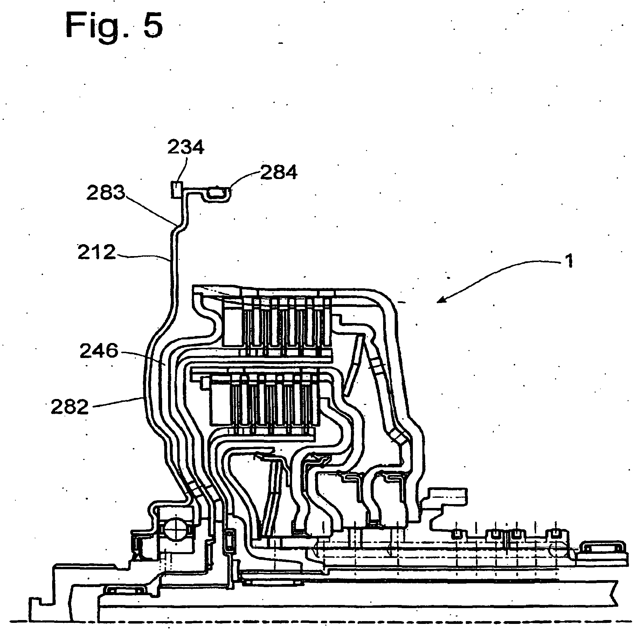

In den Figuren 4 und 5 ist die Doppelkupplungseinrichtung 1 aus Figur 1 dargestellt mit jeweils einer alternativen Ausgestaltung der Verschtusswandung. Die Verschlusswandung 112 in Figur 4 erstreckt sich ausgehend vom Bereich der axialen Ausbuchtung 182 axial in Richtung Sicherungselement 176, ist dort gefaltet und erstreckt sich dann in Richtung Getriebe, wobei axial endseitig die Ringnut 170 angeordnet ist.

Die Verschlusswandung 212 in Figur5 weist im Gegensatz zu den Verschlusswandung 12 und 112 der Figuren 1 und 4 keine deutliche axiale Ausbuchtung im radial äußeren Bereich auf. Die radiale Elastizität wird durch die lange axiale Auskragung 284 bis zum Anschlag an das Sicherungselement 234 und durch die Verkippung der im wesentlichen senkrechten Rückwand erreicht. Die im mittleren Bereich an die Form des Mitnehmers 246 angepaßte Ausbuchtung 282 der Verschlusswandung 212 versteift die Verschlusswandung 212 im mittleren Bereich.

### Bezugszeichenliste

- 1.: Doppelkupplungseinrichtung
- 2.: erste Kupplungsanordnung
- 4.: zweite Kupplungsanordnung
- 6.: erste Getriebewelle
- 8.: zweite Getriebewelle
- 10.: Kupplungsgehäuse
- 12.: Verschlusswandung
- 14.: zentrale Öffnung
- 16.: Ankoppelglied
- 17.: Haltevorrichtung
- 18.: Randbereich
- 20.: erste Radiallageranordnung
- 24.: zweite Lageranordnung
- 26.: erster Lagersitz
- 28.: zweiter Lagersitz
- 34.: Sicherungselement
- 36.: Axialgleitlager
- 38.: Nabe des Innenlamellenträgers der ersten Kupplungseinrichtung
- 40.: Axiallager,
- 42.: Nabe des Innenlamellenträgers der zweiten Kupplungseinrichtung
- 44.: Axialsicherung
- 46.: Mitnehmer
- 52.: Schrägkugellager
- 56.: Nadellager
- 58.: Außenlamellenträger
- 60.: Innenlamellenträger
- 62.: Ölzufuhrnabe
- 70.: Ringnut
- 72.: Dichtungselement
- 74.: axiale Stege
- 76.: Sicherungsnut
- 78.: zylindrischer Bereich
- 80.: zylindrischer Bereich
- 82.: axiale Ausbuchtung
- 84.: axialer Bereich der Ausbuchtung
- 86.: axialer Bereich der Ausbuchtung
- 88.: radialer Bereich der Ausbuchtung
- 90.: motorseitige Nutwandung
- 92.: getriebeseitige Nutwandung
- 94.: Nutboden
- 96.: Naßraum
- 98.: Trockenraum
- 112.: Verschlusswandung
- 170.: Ringnut
- 176.: Sicherungselement
- 182.: axiale Ausbuchtung
- 212.: Verschlusswandung
- 234.: Sicherungselement
- 246.: Mitnehmer
- 282.: Ausbuchtung
- 283.: axiale Stufe
- 284.: Auskragung

## Patentansprüche

1. Doppelkupplungseinrichtung (1) für die Anordnung in einem Antriebsstrang eines Kraftfahrzeuges zwischen einer Antriebseinheit und einem Getriebe, wobei die Kupplungseinrichtung eine einer ersten Getriebeeingangswelle (6) des Getriebes zugeordnete erste Kupplungsanordnung (2) und eine einer zweiten Getriebeeingangswelle (8) des Getriebes zugeordnete zweite Kupplungsanordnung (4) aufweist zur Momentenübertragung zwischen der Antriebseinheit und dem Getriebe, wobei der Kupplungseinrichtung ein gegebenenfalls eine Getriebegehäuseglocke umfassendes, am Getriebe stationär angeordnetes oder anbringbares Kupplungsgehäuse (10) zugeordnet ist zur Aufnahme der Kupplungseinrichtung darin, mit einer an dem Kupplungsgehäuse radial abgestützten oder abstützbaren Verschlusswandung (12), gegebenenfalls in Form eines Deckels, zum Verschließen einer Gehäuseöffnung, der eine zentrale Öffnung (14) aufweist, durch den sich ein zu einer Eingangsseite der Kupplungseinrichtung gehörendes Ankoppelglied (16) erstreckt, an dem die Antriebseinheit direkt oder indirekt, gegebenenfalls unter Vermittlung einer Torsionsschwingungsdämpferanordnung, angekoppelt oder ankoppelbar ist, wobei im Bereich eines die Öffnung begrenzenden Randbereichs (18) der Verschlusswandung (12) und dem Ankoppelglied (16) eine Radiallageranordnung (20) zur radialen Lagerung der Kupplungseinrichtung vorgesehen ist, wobei die Verschlusswandung radial elastisch ausgebildet ist,
wobei das Material der Verschlusswandung (12) einen geringeren Wärmeausdehnungskoeffizienten als das Material des Kupplungsgehäuses (10) aufweist, wobei die Verschlusswandung (12) am Außenumfang eine nach radial außen offene Nut (70) zur Aufnahme eines Dichtelementes (72) aufweist,
wobei eine der Antriebseinheit zugewandte Nutwandung (92) einen radial größeren Außendurchmesser aufweist als die andere und radial im Kupplungsgehäuse (10) anliegt, während die andere Nutwandung radial nicht am Kupplungsgehäuse anliegt.

2. Doppelkupplungseinrichtung (1) für die Anordnung in einem Antriebsstrang eines Kraftfahrzeuges zwischen einer Antriebseinheit und einem Getriebe, wobei die Kupplungseinrichtung eine einer ersten Getriebeeingangswelle (6) des Getriebes zugeordnete erste Kupplungsanordnung (2) und eine einer zweiten Getriebeeingangswelle (8) des Getriebes zugeordnete zweite Kupplungsanordnung (4) aufweist zur Momentenübertragung zwischen der Antriebseinheit und dem Getriebe, wobei der Kupplungseinrichtung ein gegebenenfalls eine Getriebegehäuseglocke umfassendes, am Getriebe stationär angeordnetes oder anbringbares Kupplungsgehäuse (10) zugeordnet ist zur Aufnahme der Kupplungseinrichtung darin, mit einer an dem Kupplungsgehäuse radial abgestützten oder abstützbaren Verschlusswandung (12), gegebenenfalls in Form eines Deckels, zum Verschließen einer Gehäuseöffnung, der eine zentrale Öffnung (14) aufweist, durch den sich ein zu einer Eingangsseite der Kupplungseinrichtung gehörendes Ankoppelglied (16) erstreckt, an dem die Antriebseinheit direkt oder indirekt, gegebenenfalls unter Vermittlung einer Torsionsschwingungsdämpferanordnung, angekoppelt oder ankoppelbar ist, wobei im Bereich eines die Öffnung begrenzenden Randbereichs (18) der Verschlusswandung (12) und dem Ankoppelglied (16) eine Radiallageranordnung (20) zur radialen Lagerung der Kupplungseinrichtung vorgesehen ist, wobei die Verschlusswandung radial elastisch ausgebildet ist,
wobei das Material der Verschlusswandung (12) einen geringeren Wärmeausdehnungskoeffizienten als das Material des Kupplungsgehäuses (10) aufweist,
wobei die Verschlusswandung (12) am Außenumfang axiale Stege (74) aufweist.

3. Kupplungseinrichtung nach Anspruch 1 oder 2,
**dadurch gekennzeichnet,**
**dass** die Verschlusswandung (12) axial elastisch ausgebildet ist.

4. Kupplungseinrichtung nach Anspruch 1 oder 2,
**dadurch gekennzeichnet,**
**dass** die Radiallageranordnung (20) zusammen mit der Verschlusswandung (12) eine fertige Baueinheit bilden, welche im Zuge des Montagevorganges mittels eines Montagewerkzeugs axial in das Kupplungsgehäuse (10) geschoben wird, wobei die Radiallageranordnung (20) auf einen zugeordneten Lagersitz des Ankoppelgliedes (16) axial geschoben wird, und wobei sich der Außenumfang der Verschlusswandung (12) im Zuge des Montagevorgangs verringert.

5. Kupplungseinrichtung nach Anspruch 1 oder 2,
**dadurch gekennzeichnet,**
**dass** die Verschlusswandung (12) als Stahlblechdeckel ausgeführt ist.

6. Kupplungseinrichtung nach Anspruch 5,
**dadurch gekennzeichnet,**
**dass** der Stahlblechdeckel in einem Tiefziehverfahren hergestellt wird.

7. Kupplungseinrichtung nach Anspruch 2,
**dadurch gekennzeichnet,**
**dass** sich die axialen Stege (74) an einem Sicherungselement (34) in Richtung Antriebseinheit abstützen.

8. Kupplungseinrichtung nach Anspruch 7,
**dadurch gekennzeichnet,**
**dass** das Sicherungselement (34) als Toleranzausgleichsvorrichtung wirkt.

## Claims

1. Double clutch device (1) for arrangement in a drive train of a motor vehicle between a drive unit and a transmission, the clutch device having a first clutch arrangement (2), which is assigned to a first transmission input shaft (6) of the transmission, and a second clutch arrangement (4), which is assigned to a second transmission input shaft (8) of the transmission, for the transfer of torque between the drive unit and the transmission, the clutch device being assigned, for the reception of the clutch device therein, a clutch housing (10) which, if appropriate, comprises a transmission housing bell and which is arranged or can be mounted on the transmission in a stationary manner, with a closing wall (12), if appropriate in the form of a cover, which is supported or can be supported radially on the clutch housing, for closing a housing opening, the said cover having a central opening (14) through which extends a coupling member (16) which belongs to an input side of the clutch device and to which the drive unit is coupled or can be coupled directly or indirectly, if appropriate with a torsional vibration damper arrangement being interposed, a radial bearing arrangement (20) for the radial mounting of the clutch device being provided in the region of an edge region (18), delimiting the opening, of the closing wall (12) and the coupling member (16), and the closing wall is of elastic design radially,
wherein the material of the closing wall (12) has a lower coefficient of thermal expansion than the material of the clutch housing (10), wherein on the outer circumference the closing wall (12) has a radially outwardly open groove (70) for receiving a sealing element (72),
wherein one groove wall (92) facing the drive unit has a radially larger outside diameter than the other and bears radially in the clutch housing (10), while the other groove wall does not radially abut to the clutch housing.

2. Double clutch device (1) for arrangement in a drive train of a motor vehicle between a drive unit and a transmission, the clutch device having a first clutch arrangement (2), which is assigned to a first transmission input shaft (6) of the transmission, and a second clutch arrangement (4), which is assigned to a second transmission input shaft (8) of the transmission, for the transfer of torque between the drive unit and the transmission, the clutch device being assigned, for the reception of the clutch device therein, a clutch housing (10) which, if appropriate, comprises a transmission housing bell and which is arranged or can be mounted on the transmission in a stationary manner, with a closing wall (12), if appropriate in the form of a cover, which is supported or can be supported radially on the clutch housing, for closing a housing opening, the said cover having a central opening (14) through which extends a coupling member (16) which belongs to an input side of the clutch device and to which the drive unit is coupled or can be coupled directly or indirectly, if appropriate with a torsional vibration damper arrangement being interposed, a radial bearing arrangement (20) for the radial mounting of the clutch device being provided in the region of an edge region (18), delimiting the opening, of the closing wall (12) and the coupling member (16), and the closing wall is of elastic design radially,
wherein the material of the closing wall (12) has a lower coefficient of thermal expansion than the material of the clutch housing (10),
wherein the closing wall (12) has axial webs (74) on the outer circumference.

3. Clutch device according to Claim 1 or 2
**characterized in that**
the closing wall (12) is of elastic design axially.

4. Clutch device according to Claim 1 or 2,
**characterized in that**
the radial bearing arrangement (20) together with the closing wall (12) form a finished constructional unit which, during the course of the installation operation, is pushed by means of an installation tool axially into the clutch housing (10), the radial bearing arrangement (20) being pushed axially onto an assigned bearing seat of the coupling member (16) and the outer circumference of the closing wall (12) being reduced during the course of the installation operation.

5. Clutch device according to Claim 1 or 2,
**characterized in that**
the closing wall (12) is designed as a sheet steel cover.

6. Clutch device according to Claim 5,
**characterized in that**
the sheet steel cover is produced in a deep-drawing process.

7. Clutch device according to Claim 2,
**characterized in that**
the axial webs (74) are supported in the direction of the drive unit on a securing element (34).

8. Clutch device according to Claim 7,
**characterized in that**
the securing element (34) acts as a tolerance compensation device.

## Revendications

1. Dispositif de double embrayage (1) destiné à être agencé dans une chaîne cinématique d'un véhicule automobile entre une unité d'entraînement et une transmission, dans lequel le dispositif d'embrayage présente un premier agencement d'embrayage (2) associé à un premier arbre d'entrée de transmission (6) de la transmission, et un deuxième agencement d'embrayage (4) associé à un deuxième arbre d'entrée de transmission (8) de la transmission, pour le transfert de couple entre l'unité d'entraînement et la transmission, le dispositif d'embrayage étant associé à un boîtier d'embrayage (10) disposé ou pouvant être disposé de manière stationnaire sur la transmission, comprenant éventuellement une cloche de boîtier de transmission, pour recevoir le dispositif d'embrayage, avec une paroi de fermeture (12) supportée ou pouvant être supportée radialement contre le boîtier d'embrayage, éventuellement en forme de couvercle, pour fermer une ouverture de boîtier, qui présente une ouverture centrale (14), à travers lequel couvercle s'étend un organe d'accouplement (16) appartenant à un côté d'entrée du dispositif d'embrayage, auquel l'unité d'entraînement est accouplée ou peut être accouplée directement ou indirectement, éventuellement par l'intermédiaire d'un agencement d'amortisseur des oscillations de torsion, un agencement de palier radial (20) pour le support radial sur palier du dispositif d'embrayage étant prévu dans la région d'une région de bord (18) de la paroi de fermeture (12) limitant l'ouverture et de l'organe d'accouplement (16), la paroi de fermeture étant réalisée de manière radialement élastique,
le matériau de la paroi de fermeture (12) présentant un coefficient de dilatation thermique plus faible que le matériau du boîtier d'embrayage (10), la paroi de fermeture (12) présentant sur la périphérie extérieure une rainure (70) ouverte radialement vers l'extérieur pour recevoir un élément d'étanchéité (72), une paroi de rainure (92) faisant face à l'unité d'entraînement présentant un diamètre extérieur radialement plus grand que l'autre, et s'appliquant radialement dans le boîtier d'embrayage (10), alors que l'autre paroi de rainure ne s'applique pas radialement contre le boîtier d'embrayage.

2. Dispositif de double embrayage (1) destiné à être agencé dans une chaîne cinématique d'un véhicule automobile entre une unité d'entraînement et une transmission, dans lequel le dispositif d'embrayage présente un premier agencement d'embrayage (2) associé à un premier arbre d'entrée de transmission (6) de la transmission, et un deuxième agencement d'embrayage (4) associé à un deuxième arbre d'entrée de transmission (8) de la transmission, pour le transfert de couple entre l'unité d'entraînement et la transmission, le dispositif d'embrayage étant associé à un boîtier d'embrayage (10) disposé ou pouvant être disposé de manière stationnaire sur la transmission, comprenant éventuellement une cloche de boîtier de transmission, pour recevoir le dispositif d'embrayage, avec une paroi de fermeture (12) supportée ou pouvant être supportée radialement contre le boîtier d'embrayage, éventuellement en forme de couvercle, pour fermer une ouverture de boîtier, qui présente une ouverture centrale (14), à travers lequel couvercle s'étend un organe d'accouplement (16) appartenant à un côté d'entrée du dispositif d'embrayage, auquel l'unité d'entraînement est accouplée ou peut être accouplée directement ou indirectement, éventuellement par l'intermédiaire d'un agencement d'amortisseur des oscillations de torsion, un agencement de palier radial (20) pour le support radial sur palier du dispositif d'embrayage étant prévu dans la région d'une région de bord (18) de la paroi de fermeture (12) limitant l'ouverture et de l'organe d'accouplement (16), la paroi de fermeture étant réalisée de manière radialement élastique,
le matériau de la paroi de fermeture (12) présentant un coefficient de dilatation thermique plus faible que le matériau du boîtier d'embrayage (10), la paroi de fermeture (12) présentant, sur la périphérie extérieure, des nervures axiales (74) .

3. Dispositif d'embrayage selon la revendication 1 ou 2,
**caractérisé en ce que**
la paroi de fermeture (12) est réalisée de manière axialement élastique.

4. Dispositif d'embrayage selon la revendication 1 ou 2,
**caractérisé en ce que**
l'agencement de palier radial (20) conjointement avec la paroi de fermeture (12) forment une unité constructive finie, qui est poussée au cours de l'opération de montage au moyen d'un outil de montage axialement dans le boîtier d'embrayage (10), l'agencement de palier radial (20) étant poussé axialement sur un siège de palier associé de l'organe d'accouplement (16), et la périphérie extérieure de la paroi de fermeture (12) se réduisant au cours de l'opération de montage.

5. Dispositif d'embrayage selon la revendication 1 ou 2,
**caractérisé en ce que**
la paroi de fermeture (12) est réalisée sous forme de couvercle en tôle d'acier.

6. Dispositif d'embrayage selon la revendication 5,
**caractérisé en ce que**
le couvercle en tôle d'acier est fabriqué dans un procédé d'emboutissage profond.

7. Dispositif d'embrayage selon la revendication 2,
**caractérisé en ce que**
les nervures axiales (74) s'appuient sur un élément de fixation (34) dans la direction de l'unité d'entraînement.

8. Dispositif d'embrayage selon la revendication 7,
**caractérisé en ce que**
l'élément de fixation (34) agit en tant que dispositif de compensation des tolérances.
